# EUROPEAN PATENT APPLICATION

(11) **EP 2 977 750 A1**
(43) Date of publication of application: **27.01.2016**
(21) Application number: 14178172.4
(22) Date of filing: 23.07.2014
(51) Int. Cl.: G01N 21/77, G02B 6/02

(54) **Fibre optic chemical sensor**

(71) Applicant: Nederlandse Organisatie voor toegepast- natuurwetenschappelijk onderzoek TNO, 2595 DA 's-Gravenhage (NL)
(72) Inventor: Boersma, Arjen, 2595 DA 's-Gravenhage (NL); Dirks, Bob Petrus Franciscus, 2595 DA 's-Gravenhage (NL); Lemmen, Martinus Henricus Johannes, 2595 DA 's-Gravenhage (NL)
(74) Representative: V.O.

(57) **Abstract**

A fibre optic chemical sensor device (1) comprising (i) a housing (5) comprising a porous wall (9), (ii) a fibre optic chemical sensor enclosed by the housing (5), which sensor comprises an optical fibre (3) comprising a transducer optical fibre portion (7) covered by a responsive coating (8) that responds to an interaction with an analyte, and (iii) a selectively permeable substance (6) covering the fibre optic chemical sensor. The housing (5) is filled by the selectively permeable substance (6) that supports the fibre (3). The responsive coating (8) may respond with a volume change on the interaction with the analyte, and the transducer optical fibre portion (7) may comprise a Bragg grating. The device is in particular suited for use in down-hole applications for oil, gas, or geothermal energy exploration.

## Description

The present invention relates to an optical fibre chemical device. More in particular it relates to such a device comprising (i) a housing comprising a porous wall, (ii) a chemical sensor enclosed by the housing, which sensor comprises an optical fibre (3) and a responsive coating (8) for responding to an interaction with an analyte, the coating covering a transducer optical fibre portion (7) for transducing the response of the coating into an optical signal, and (iii) a selective permeable substance covering the chemical sensor.

### State of the art

Chemical sensors are devices that can provide information about the chemical properties of materials, including gasses and liquids. More in particular chemical sensors can provide information about the presence of certain elements or compounds in the environment in which the sensor is placed or which elements or compounds are brought otherwise in contact with the sensor. Chemical sensors may provide quantitative and qualitative information. In optical chemical sensors the information is obtained by or via an optical signal that is representative for the property to be measured or detected. Optical sensors comprise a responsive element that, due to interaction with its environment, responses to changes in its environment, for example a change in optical properties such as refractive index or colour of a liquid. The responsive element may also respond to the presence of certain chemical components. Optical sensors often comprise a transducer that transduces the response to an optical signal that may be transmitted to an apparatus for data processing, preferably by an optical fibre. An advantage of optical sensors over electrical sensors is that optical sensors have a low loss in signal over long distances and that optical fibres are hardly prone to electromagnetic interference that may obscure the electrical measurement or the transfer of measurement data by electronic means. Further, the use of optical signals is preferred in environments where there is a high risk for ignition of fire or an explosion, for example due to the presence of highly explosive gasses. In a fibre optical sensor, the fibre is not only used for transmitting a signal but also for transducing a response into an optical signal. A fibre optical sensor may comprise a coating of which the refractive index depends on the composition of the environment in which the sensor is placed. An example of a fibre optical chemical sensor where the change in optical properties of such a coating is used for determining the concentration of chemicals is disclosed in US patent 6,694,067.

In another type of fibre optical sensor, changes in the length of an optical fibre are used for obtaining information about the environment in which the sensor is placed or with which the sensor interacts. Although the unit length is not an optical property itself, some optical properties of a fibre are a function of its length. Varying the length of the sensor fibre in a fibre interferometer will for example result in a varying phase difference between the light traveling through the sensor fibre and the light travelling through a reference fibre with a fixed length. In an optical fibre comprising a periodic grating in the core of the fibre, the spectrum of the light coming out of the fibre will change when the periodicity of the grating varies due to elongation or shrinkage of such a fibre. Such gratings, which are known as Fibre Bragg Gratings or Long Period Gratings, are applied in for example pressure sensors.

The elongation or shrinkage of the optical fibre can be caused by a volume change of a volumetric responsive coating that is applied to the fibre. A volumetric responsive coating is a coating of which the volume changes due to an interaction with a chemical substance, often the absorption of such a chemical substance. The type of chemical substances that will result in a volume change of the responsive coating depends on the composition and structure of the coating. Optical fibre chemical sensors for detecting or analysing specific substances can be obtained by a proper selection of the volumetric responsive coating.

An aspect of an optical fibre chemical sensor is that such a sensor must be selective and that in particular the responsive part must be protected against damaging influences of the environment in which the sensor is used. An environment that may be damaging for such a sensor is the human body. US patent 7,003,184 discloses a fibre optic probe for use in human body. The sensor of this known probe is protected by a membrane that is arranged over a reactive coating disposed on the fibre and it is further protected by being positioned in a porous housing. The fibre is mechanically supported by the housing by means of a number of annular support members. Two of such support members are situated at each side of the part of the fibre comprising the reactive coating and the protective membrane. A problem of this known probe is that vibrations of the surrounding environment, for example shock waves coming from one direction or an impact on the probe may result in a damaging movement of the detector part because the fibre is only supported at a few discrete positions. Another problem associated with this known probe is that possible harmful substances that are not blocked by the porous housing can freely move into the housing and contacting the parts of the fibre that are not protected by the membrane protecting the reactive coating.

### Summary of the invention

It is an objective of the present invention to provide an optical fibre chemical device which overcomes the above mentioned problems, is robust, and can be applied in a more extreme environment than known optical fibre chemical devices.

This objective of the invention is obtained by an optical fibre chemical device comprising
- a housing comprising a porous wall,
- a chemical sensor enclosed by the housing, which sensor comprises an optical fibre (3) and a responsive coating (8) for responding to an interaction with an analyte, the coating covering a transducer optical fibre portion (7) for transducing the response of the coating into an optical signal, and
- a selective permeable substance covering the chemical sensor,
characterised in that the space between the chemical sensor and the housing is filled by the selective permeable substance.

An advantage of filling the space between the optical fibre chemical sensor and the housing by the selective permeable substance is that the sensor is uniformly supported and completely embedded in the selective permeable substance. An effect is that the movement of the sensor relative to the housing is damped by the permeable substance. Another effect is that not only the portion of the optical fibre covered by the responsive coating but the whole fibre sensor is protected against substances that are blocked by either the housing or the selective permeable substance. Embedding also provides protection of the sides of the responsive coating which otherwise might be unprotected when only the top side is covered. As a result, the optical fibre chemical device can be applied in more extreme environmental conditions, including a high pressure as may be present in for example bore-holes for oil and gas or at the bottom of an ocean. Such a device may also be more robust, among others because filling the housing contributes to the mechanical strength of the device, more in particular its resistance against local forces.

In a preferred embodiment of the optical fibre chemical device, an optical property of the optical fibre portion varies with its length and the responsive coating responses with a volume change to the interaction with an analyte to which the coating is exposed. Often such a volume change is caused or initiated by absorption of the analyte. The volume change of the responsive coating that is bond to the fibre portion will result in a change of the length change of the fibre portion. An advantage of a responsive coating which responses with a volume change to the interaction with the analyte is that a very sensitive optical fibre sensor can be obtained because of a large change in the length of the fibre portion when compared to the wavelength of the light that is used.

In a preferred embodiment of the optical fibre chemical device the transducer optical fibre portion comprises a Bragg grating. An effect of such a grating is that light with a small bandwidth around a specific wavelength is diffracted backwards in the fibre in the direction of the source of the light. The wavelength of the diffracted light is determined, among others, by the characteristic periodic distance of the grating and the refractive index of the fibre material. The grating distance will change when such a fibre is stretched, compressed or bent, and consequently also the characteristic wavelength, the so called Bragg wavelength, will change. In other words, the volume change of the responsive coating is transduced into a change of the optical spectrum of the light signal. Such a change can easily be detected and quantified with well-known interrogators.

In an embodiment of the optical fibre chemical device, the optical fibre chemical sensor is fixed to the housing at both sides of the transducer optical fibre portion. An effect of fixing this fibre portion at both sides to the housing is that the sensor is kept better in its position than without such a fixation. An advantage of this effect is that it results in a more reliable signal because the distortion of the fibre, for example a homogeneous or non-homogeneous variation of its length, will be limited. A further advantage of this effect is that forces acting on the fibre or the part of the fibre outside the housing have no influence on the sensor, more in particular on the length of the responsive portion of the fibre.

In an embodiment of the optical fibre chemical device comprising a volumetric responsive coating, the responsive coating comprises tapered ends where the thickness of the coating gradually decreases. An effect of such a gradually decreasing thickness is that such a geometry reduces the shear forces at the interface between the coating and the underlying part of the fibre. An advantage of this effect is that it results in a better and more reliable adhesion of the coating to the fibre and that the sensor can withstand larger variation in length which may allow measuring and detecting larger variations in concentration of chemical substances in the environment and which may allow the use at a wider temperature range, in particular at high temperatures.

In an embodiment of the optical fibre chemical device, the optical fibre is piercing the housing twice. An effect is that multiple devices can be arranged in series on one and the same optical fibre. This effect makes this embodiment of the device in particular suited for use in a distributed sensor system comprising multiple devices in series.

In an embodiment of the optical fibre chemical sensor, the housing encloses a reference sensor which does not respond to the same analyte as the optical fibre chemical sensor comprising the responsive coating. An effect of enclosing such a reference sensor in the vicinity of the responsive chemical sensor is that it is possible to correct the measuring signal of the chemical sensor for variations that do not find their origin in the presence of the analyte. An example of such a reference sensor is a temperature sensor. An advantage of this effect is that the chemical sensor is less prone to variation in environmental conditions other than the presence of the analyte.

In a further embodiment, the reference sensor is embodied in a second transducer optical fibre portion of the optical fibre. An advantage is that the same optical fibre is used and that a similar physical principle may the basis for the measurement. The effect is that the signal analysis can be performed with similar or the same equipment as used for the analysis of the signal coming from the chemical sensor. This second optical fibre portion may comprise a Fibre Bragg Grating.

A further objective of the present invention is to analyse and/or detect substances in a bore hole. This objective is obtained by the use of the optical fibre chemical sensor according to the invention. An advantage of using the optical fibre chemical sensor according to the invention is that this sensor can be used in the harsh conditions existing in a bore hole.

A still further objective of the present invention is the efficient exploration of oil, gas, and geothermal energy sources. This objective is obtained by the use of the optical fibre chemical sensor system comprising two or more optical chemical devices according to the invention. In addition to the advantages mentioned above, the use of multiple devices allows simultaneous or quasi-simultaneous measurements at different positions.

### Brief description of the figures

- Fig. 1: shows schematically two cross sectional views of an embodiment of the optical fibre chemical device;
- Fig. 2: shows schematically an embodiment of the sensor comprising tapered ends of the responsive coating;
- Fig. 3: shows schematically two cross sectional views of an embodiment of the optical fibre chemical device comprising a thermometer;
- Fig. 4: shows schematically a distributed chemical sensor system comprising multiple devices.

### Detailed description of the invention

The optical fibre chemical device can be applied for measuring the presence or concentration of one or more chemical substances in an environment. In the following such chemical substances will be referred to as analytes. The environment may an environment that is accessible to human beings but in particular it may be an environment with more extreme conditions. Extreme conditions are for example a very high or vary low temperature in comparison with normal atmospheric conditions on earth. Extreme conditions may also be high pressure, viz. pressures higher than one atmosphere, or very low pressure. Also the presence of harmful vapours, gasses, and liquids may result in a harsh environment with extreme conditions. By a proper selection of the materials used in manufacturing, the device is in particular suited for use in harsh environments. Use in harsh environments includes the use under conditions that are present in exploring oil and gas fields, and geothermal energy, in particular down-hole.

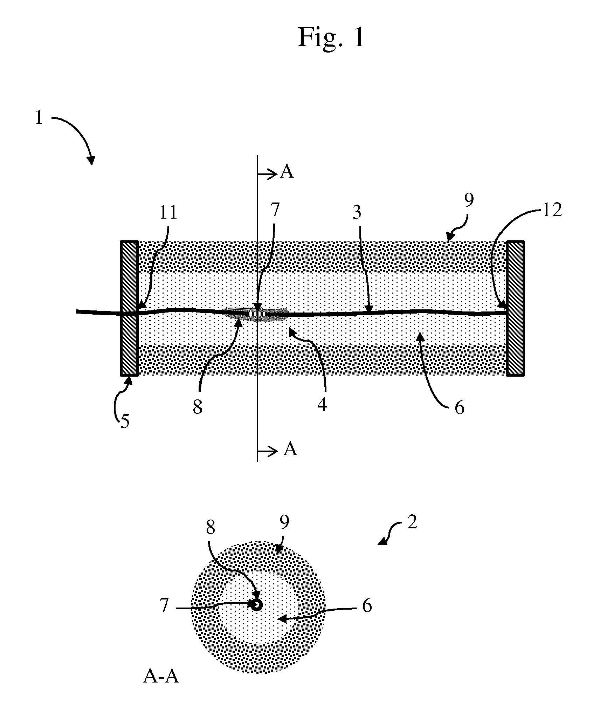

The optical fibre chemical device is further described here with reference to the embodiment shown in figure 1. This figure shows such an embodiment schematically. In particular the dimensions, viz. the thickness and size of the different elements are not shown on scale. Figure 1 shows two cross-sectional views, one (1) cutting the optical fibre (3) in its length and one (2) cutting the optical fibre transverse. The device comprises a chemical sensor (4), a housing (5), and a selective permeable substance (6) filling the housing.

The housing comprises a porous wall (9) that allows an analyte to come into contact with the optical fibre chemical sensor that is enclosed by the housing. An important function of the housing is to protect the sensor against damage, in particular mechanical damage. Mechanical damage may be caused by solids present in the environment where the sensor is used. In the earth this may be for example rocks but also sand particles. To allow performing the measurement, the analyte should come into contact with the sensor, more in particular with the responsive coating (8). This means that the housing should be permeable for the analyte. Often the analyte is a molecule in the form of a gas or a liquid, or it is a molecule or ion dispersed or dissolved in a liquid. In other words, the housing must function as a sieve that keeps relative large particles away from the sensor and that allows in particular molecules and ions, including salts and acids, to enter the housing. For down-hole application the analytes may for example be salt and water or carbon dioxide or hydrocarbons. To allow a fast response of the sensor to a varying environment, more in particular to a varying concentration of an analyte, preferably a large part of the housing is porous. Such a porous part of the housing may for example be the wall of a hollow tube. Such a tube may have a rectangular or polygonal cross section. However, an oval, more in particular a circular cross section may be preferred for optimal mechanical strength of such a tube. The porous wall may be a perforated metallic, ceramic, or polymeric wall having holes with a size that is chosen to obtain optimal protection of the sensor. A metallic wall may for example be made of a metal with a good resistance against corrosion, for example a nickel alloy. In order to keep for example sand and other small particles out of the housing, the wall may comprise holes that have a characteristic size, for example a diameter for round holes, up to about 100 micrometres. The holes must be large enough to allow the diffusion of water and the relevant ions through the wall, so at least a few nanometres. The porous wall may also be made out of metallic wires that are woven or otherwise joined in a nonwoven structure to obtain a coherent wall that prevents particles passing the wall. The porous wall may also be made by rapid manufacturing techniques such as additive manufacturing, more in particular three-dimensional (3D) printing. Such rapid manufacturing techniques allow the manufacturing of specific well-defined three dimensional structures which structures cannot be realised by other manufacturing techniques.

The optical fibre chemical sensor comprises a transducer optical fibre portion (7). Preferably, a transducer fibre portion is used of which an optical property varies with its length as will be discussed here in some more detail. Such a fibre portion may be combined with a volumetric responsive coating as discussed later.The length variation of an optical fibre can for example be determined by an interferometer. In such an embodiment, the responsive optical fibre portion may be a part of the interferometer in which the difference in optical length between such a portion and a reference optical fibre results in a phase difference of the two optical signals. In a preferred embodiment of the transducer optical fibre portion, this portion comprises a grating, more preferably a Bragg grating. Such a grating may be embodied in a periodic variation of the refractive index in the core of the fibre. The spectrum of the light traveling through the fibre will be changed by such a grating, depending on the periodicity of the refractive index variation. Only light with a wavelength corresponding to the periodicity will be diffracted in backwards direction. So, a change in frequency or wavelength of the diffracted light (in forward or backward direction) is a measure for a change in the grating, more in particular the length of the fibre portion comprising the grating. Interrogating equipment comprising for example a laser light source is well known to those skilled in the art. Preferably the backward diffracted signal is used.

The transducer portion of the fibre in the embodiment of the sensor discussed here, is covered by a volumetric responsive coating (8) which responses with a volume change when absorbing an analyte. The responsive coating is bond to the core of the fibre portion, either directly or indirectly via for example a cladding layer. There exist many types of coatings which swell or shrink upon absorption of a chemical substance. Well known are for example polymers such as poly(vinyl alcohol) and poly(ethylene oxide) that swell upon the uptake of water. For use in a sensor, the coating should be selective for the analyte. Ideally, the coating responses only to one analyte but in practise the coating will also respond to other chemical substances. So, in practise the coating will be selected out of a group of coatings of which the volumetric response to the analyte, thus the volume change caused by the absorption of the analyte is higher than the volumetric response to other chemical substances that are brought into contact or otherwise interact with the responsive coating.

The responsive coating may be covered by or may comprise one or more layers of selective materials that hinder certain chemical substances to come into contact with the responsive coating. An advantage of an embodiment comprising multiple layers of different materials is that each of the separate layers can be selected from a larger group of materials because not each of the materials itself need to have the required selectivity. A responsive coating that is in particular suitable for detecting salt concentrations is for example a crosslinked coating comprising vinyl ether and acrylamide building blocks. Such a coating of which the water content varies with the salt concentration of the surrounding water due to osmotic pressure, may be used in down-hole applications. The response of the coating, more in particular the degree of the volume change upon exposure to an analyte may be steered by the degree of crosslinking. This embodiment of the sensor is based on its property that a variation in the volume of the responsive coating induces a variation in the length of the responsive optical fibre portion. So, an anisotropic coating of which only the thickness changes when absorbing an analyte will not satisfy. Neither will satisfy a responsive coating that does not exert a force in the length direction of the fibre portion that is sufficient to vary the length of the fibre portion. In order to induce a change in the length of the fibre portion, the coating may have a stiffness that is higher that the stiffness of the fibre but this need not to be. Also a coating having a stiffness less than the stiffness of the fibre may satisfy. This later will in general be the case when a polymeric coating is used. The responsive coating preferably covers the responsive portion of the fibre completely, but this need not to be. The responsive coating may be limited to a part of the fibre portion. In order to induce a variation in length of the optical fibre portion, the responsive coating is attached to the fibre such that a variation in volume will result in a lateral compressive or tractive force on the fibre portion. For an optimal adhesion of the responsive coating, an intermediate coating may be applied between the fibre portion, more in particular the core or the cladding of the optical fibre portion, and the responsive coating. The thickness of the responsive coating typically is between a few micrometres and several hundred micrometres, for example between 5 micrometres and 500 micrometres. Depending on the type coating the coating may have a thickness less than 10 micrometres, for example when using a zeolite, or a thickness between 100 micrometres and 300 micrometres for specific polymeric coatings. A thin coating may give a fast response to a variation in the environment, whereas a thick coating may result in a higher sensitivity of the sensor, in particular if the coating is a volumetric responsive coating.

In another embodiment, the transducer optical fibre portion may be covered by a responsive coating of which an optical property, for example the refractive index, changes when the coating absorbs the analyte or otherwise interacts with the analyte. A change in the refractive index of the coating may result in a change in the transmission of the light by the optical fibre. Also in this embodiment the fibre portion may comprise a Bragg grating to diffract light. Here, it is however not a change in the periodicity of the grating that results in a change of the diffracted light, but a change in the optical properties of the coating. For example, a change in the refractive index of the coating relative to the core of the fibre and, as the case may be, relative to the cladding, will change the optical spectrum of the light transmitted by the fibre.

The type of analytes that can be determined either quantitatively or qualitatively is not only determined by the properties of the chemical sensor but also by the housing and more in particular the selective permeable substance (6) embedding the optical fibre chemical sensor. The substance is filling the space between the optical fibre chemical sensor and the housing. By filling the space between the sensor and the wall, the substance provides a uniform support of the embedded sensor thereby avoiding or at least minimizing the deformation, more in particular a variation in length, of the sensor by other causes than the interaction with a chemical substance, more in particular the analyte. Further, by filling the space enclosed by the housing, the substance may provide additional protection against deformation caused by compressive forces, for example high pressure, on the device. Because the substance is embedding the sensor, it provides protection to the whole sensor against possible harmful chemical substances in the environment. By filling the housing, harmful chemical substances are hindered entering the inner part of the housing which substances otherwise might pass the porous wall. The selective permeable substance may be selected from any class of materials that allows the analyte to permeate through the substance. To be selective, however, some other chemical substances than the analyte should be blocked by the substance or at least should be hindered in the permeation through the substance as easy as the analyte does. For example polymeric materials such as polyacrylonitrile, polyimide, and silicone rubber can be used for selecting water from gasses such as nitrogen. In particular hydrogels are suited as selective permeable substance in an aqueous environment. Examples of such hydrogels are polyacrylamide, polyacrylate, polysaccharide, polyether, polyester and polyurethane hydrogels.

A function of the porous wall is to protect the sensor as discussed before. Another function of the porous wall is to encapsulate the selective permeable substance. In particular if the substance is a fluid or a gel, the housing, more in particular the porous wall, should prevent the substance from leaking out of the housing. It are the housing, more in particular the porous wall of the housing, the substance, and possible additional selective coatings that determine which analytes can approach the responsive coating for interacting with that coating. Additional selective coatings may be situated between the responsive coating and the selective permeable substance, between the selective permeable substance and the housing, or at the external surface of the housing. Such a selective coating may be a hydrophilic or hydrophobic coating. For use in for example a maritime environment, the housing, in particular the porous wall of the housing may be coated with an antifouling coating. For use in high saline environments, the housing may be coated with an antiscaling coating. Such an antifouling or antiscaling coating prevents or at least reduces the accumulation of material, including living material in case of biofouling, on the housing, which material may hinder or even block the analyte.

In the embodiment shown in figure 1, there is only one optical fibre which fibre pierces (11) through the housing. So, one fibre is used for the sensing function and for transmitting the light from the sensor (4) to the interrogation equipment and *visa versa.* Instead of using one and the same fibre inside and outside the housing, two fibres may be applied, one inside the housing comprising the sensor and one outside the housing for transmitting the light. The use of separate fibres may be in favourable when the fibre outside the housing needs for example an additional protective coating or when easy replacement of a sensor is required. These two fibres can coupled by an optical coupler that may be fixed to the housing, either at the inside of the housing or at the outside.

In an embodiment of the device, the optical fibre chemical sensor is fixed to the housing at both sides of the responsive optical fibre portion. In the embodiment of figure 1, the distal end (12) of the fibre (13) is fixed to the housing. At the other side of the sensor, the optical fibre is fixed to the housing where the fibre pierces the housing, This fixation not only prevents the fibre from making large displacement movements in a transverse direction perpendicular to the length of the fibre but it also prevents that the fibre can move in the length direction of the fibre when for example the fibre is subjected to a tensile force. The fixation also prevents that an external force exerted on the part of the fibre that extends outside the housing will result in a length change of the optical fibre inside the housing, more in particular a change in the length of the transducer portion of the fibre. The fixation prevents that external forces on the fibre will interfere with the actual measurement of the chemical sensor. Fixation may be realised by for example mechanical clamping or a proper glue and it may be combined with or incorporated in an optical coupler coupling the fibre inside the housing with a fibre outside the housing. In order to compensate for a different thermal expansion of the fibre and the housing, the fibre may be curved to provide some addtional fibre length between the points of fixation

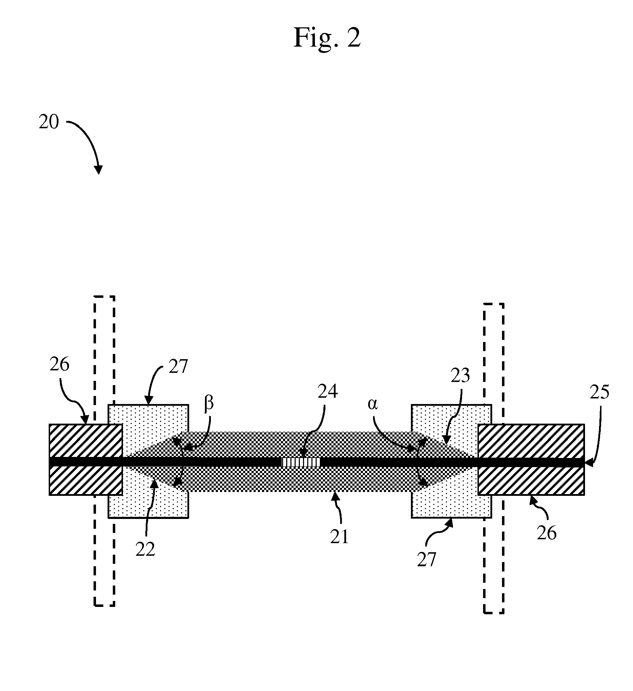

In the embodiment comprising a volumetric responsive coating, the volumetric variation of the responsive coating must be transferred to a variation in the length of the responsive portion of the fibre. This requires at good adhesion of the responsive coating and the transducer portion of the fibre. Such a good adhesion may be obtained by selecting a responsive coating with good adhesive properties. To improve the adhesion, an adhesive coating or primer may be applied. Examples of such adhesive coatings are coatings that comprise alkoxysilane, alkoxyzirconia, alkoxy titania, epoxy, isocyanate moieties that react with the fibre surface. Instead of or in addition to these measures, the responsive coating may be tapered as is shown in figure 2. Such tapered ends (22,23) are considered to be helpful to avoid detaching of the responsive coating due to the shear forces at the interface of this coating and the optical fibre core, the cladding, or a possible adhesive coating. Figure 2 shows an embodiment of the sensor (20) that can be applied in the optical fibre chemical sensor device. The optical fibre (25) of this sensor may comprise a cladding or a cladding and a coating, for example a buffer coating. In case that the fibre comprises a coating, the coating may be removed locally, for example at the transducer portion of the optical fibre. The responsive optical fibre portion (24) is coated with a responsive coating (21). At the two ends (22,23) of the fibre, the thickness of the coating gradually decreases in the direction away from the centre of the responsive fibre portion. Typically, the tapering angles (α,β), viz. the apical angles of the coating, are between 30 degrees and 90 degrees, preferably between 50 degrees and 70 degrees.

In an embodiment of the device, the optical fibre is at least partly coated with a protective coating (26) at both sides of the responsive coating. This coating may be the cladding layer of the fibre but it may also be an additional coating. The function of the protective coating is to protect the optical fibre against a harmful environment. The coating, therefore, will be selected on the basis of the type of environment in with the device is being used. The coating may protect the fibre against mechanical damage, including fracture, or chemical damage such as for example etching by acids or other chemicals. The protective coating may comprise an acrylate or polyimide. The protective coating may be combined with a tapered responsive coating as shown in figure 2. In such an embodiment, the protective coating (26) and the responsive coating are preferably applied onto the optical fibre such that both coatings do not overlap. The interface between the protective coating and the responsive coating may be covered by a glue (27), for example an epoxy. This glue may be used to fix the fibre to the housing as indicated schematically with dashed lines, to avoid leakage along the interface of the responsive coating and the fibre, or to provide additional mechanical protection.

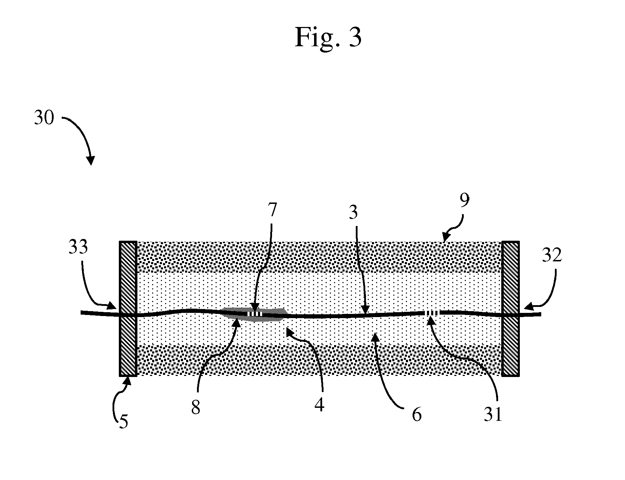

In a preferred embodiment of the optical fibre chemical device, the optical fibre is piercing the housing twice. Figure 3 shows an example of such an embodiment where the optical fibre pierces the housing at two opposite sides (32,33) of a tubular housing. An embodiment of the device where the fibre pierces the housing twice is in particular suited for us in an optical fibre chemical sensor system where two or more optical fibre chemical devices are combined on one optical fibre and where two or more optical fibre chemical devices are combined. Piercing twice includes embodiments in which not one single fibre is used but where the fibre inside the housing is coupled to one or two fibres outside the housing by a coupler. The use of such couplers is preferred when an easy replacement of a device is required. Such a distributed sensor system comprising multiple devices may favourable be used for analysis in long pipelines and bore-holes. A distributed sensor system may be preferred over a system in which a single sensor moves to the different locations for performing the measurement. In a preferred embodiment of the device, the housing is a porous tubular housing closed at both ends with a cap that need not to be porous. It is appreciated that the closing should be such that substances that are blocked by the porous wall cannot permeate through the caps. The caps may be glued, soldered, screwed, clamped, or otherwise fixed to the porous tube. In an embodiment where the optical fibre pierces the housing twice, it is preferred that this piercing is through each of the caps at the opposite sites of the tube.

The length of the transducer optical fibre portion, its refractive index or other optical properties may vary due to variations in the environment different from a variation in the concentration of the analyte, for example the temperature. Also properties of the responsive coating may vary as a function of the temperature or other conditions. For these and others reasons it may be preferred to measure the temperature or other environmental parameters at or close to the location of the sensor in order to correct the signal of the chemical sensor for this effect. An embodiment of the sensor comprises a second sensor, which may be a temperature sensor but also for example a pressure sensor. This additional sensor is placed inside the housing close to the chemical sensor and preferably mechanically decoupled from the chemical sensor to avoid mutual influence. The additional sensor, therefore, will also be protected by the housing. The additional sensor may also be embedded by the selective permeable substance which substance will provide addition protection to the additional sensor. Further, the environmental conditions at the position of the additional sensor will be similar as the condition at the chemical sensor position. Any type of additional sensor may be applied provided that it can withstand the environmental conditions at the location where the measurement is performed. An optical sensor, more in particular and optical temperature sensor may be applied because of the advantages inherent to an optical signal transfer as discussed before and the fact that a temperature variation is an environmental condition that is likely to vary. In a preferred embodiment of the optical fibre chemical device, the additional sensor is embodied in a second transducer optical fibre portion of the fibre comprising the optical fibre chemical sensor. An example of such an embodiment is shown in figure 3. Figure 3 shows a cross sectional view along the length direction of the optical fibre (3). In this embodiment the fibre pierces the housing twice at opposite positions (32,33). In other embodiments, however, the fibre may pierce the housing at one position. The additional sensor (31) is situated within the housing. In contrast to the transducer portion (7) of the fibre that is covered by a responsive coating (8), the additional sensor embodied in the second responsive portion is not covered by the responsive coating. This second responsive portion may, however, be coated with a different coating for protection purpose or to improve the functionality of the additional sensor, or even for sensing. This second responsive portion may comprise a grating, for example a Bragg grating. The optical fibre chemical device may of course comprise two or more transducer portions covered by a responsive coating.

In another embodiment of the chemical device comprising an additional sensor, this additional sensor is the reference optical branch of an interferometer comprising both the responsive optical fibre portion and the reference optical branch.

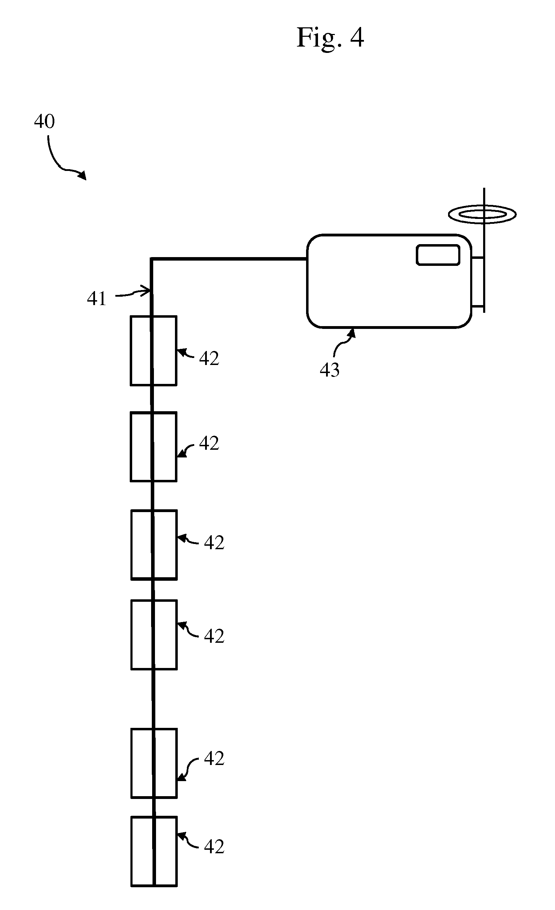

The optical fibre chemical device may be applied in an optical fibre chemical sensor system comprising two or more of such devices. The multiple devices may be interrogated by one light source, for example by multiplexing. In case that a grating is used, the different optical sensors may comprise gratings with different periodicity. In a preferred embodiment of the system as shown schematically in figure 4, a single optical fibre (41) comprises all chemical sensors. So, all the chemical devices (42) are fixed to the optical fibre. The system may comprise tens or even hundreds of sensors. All the sensors may be read out by a single interrogator (43). Such an interrogator may comprise equipment for transferring data by wire or wireless to a remote receiver station for further analysis. The system may advantageously be used for oil, gas, or geothermal energy exploration.

In down-hole applications, viz. in a bore hole in the earth, the following embodiment of the device may be advantageous. This device is in particular suited for salts such as NaCl, CaCl₂, and BaCl₂. The porous wall of the housing of the device is made out of a sintered or 3D printed porous tube being less than 100 mm long and having an outer diameter of maximum ½". The wall is made from Inconel 600 or higher grade (e.g. 718). At both ends of the tube a dedicated fibre feed through allows the fibre piercing through the housing. The responsive coating is a polymer coating comprises vinylether, acrylamide, or acrylate moieties that is crosslinked using bi- or trifunctional monomers. The selective permeable substance is acrylamide/bis-acrylamide hydrogel

Several embodiments of the invention are discussed, in particular of the optical fibre chemical device. It will be appreciated that several elements of one embodiment may be applied in another embodiment, also in case this is not mentioned explicitly. For example, also a coating that does not respond with a volume change to the interaction with the analyte, but with for example a change in the refractive index, may have tapered ends. In the embodiment shown in figure 1, a further sensor may be added and the additional sensor in figure 3 may be omitted.

## Claims

1. Optical fibre chemical device (1) comprising
- a housing (5) comprising a porous wall (9),
- a chemical sensor enclosed by the housing, which sensor comprises an optical fibre (3) and a responsive coating (8) for responding to an interaction with an analyte, the coating covering a transducer optical fibre portion (7) for transducing the response of the coating into an optical signal, and
- a selective permeable substance (6) covering the chemical sensor,
**characterised in that** the space between the chemical sensor and the housing is filled by the selective permeable substance.

2. Optical fibre chemical device according to claim 1, wherein the responsive coating responses with a volume change on the interaction with the analyte and wherein an optical property of the transducer optical fibre portion varies with its length.

3. Optical fibre chemical device according to claim 2, wherein the volumetric responsive coating (21) comprises tapered ends (22,23) where the thickness of the coating gradually decreases.

4. Optical fibre chemical device any of the preceding claims, wherein the transducer optical fibre portion comprises a Bragg grating (24).

5. Optical fibre chemical device according to any of the preceding claims, wherein the optical fibre chemical sensor is fixed to the housing at both sides (11,12) of the transducer optical fibre portion.

6. Optical fibre chemical device according to any of the preceding claims, wherein the fibre is at least partly coated with a protective coating extending at both sides of the volumetric responsive coating.

7. Optical fibre chemical device according to any of the preceding claims, wherein the optical fibre is piercing the housing twice (32,33).

8. Optical fibre chemical device according to any of the preceding claims, wherein the housing is a tubular housing sealed at both ends.

9. Optical fibre chemical device according to any of the preceding claims, wherein the responsive coating is a cross linked coating comprising vinyl ether and acrylamide building blocks.

10. Optical fibre chemical device according to any of the preceding claims wherein the housing encloses a reference sensor.

11. Optical fibre chemical device according to claim 10, wherein the reference sensor is embodied in a second transducer optical fibre portion (31).

12. Optical fibre chemical device according to any of the preceding claims wherein the porous wall is coated with an antifouling or antiscaling coating.

13. Optical fibre chemical sensor system comprising two or more optical fibre chemical devices according to any of the preceding claims.

14. Use of the optical fibre chemical sensor according to any of the claims 1 to 12 in a bore hole or for oil, gas, or geothermal energy exploration.
